# EUROPÄISCHE PATENTSCHRIFT

(11) **EP 0 598 266 B1**
(45) Veröffentlichungstag und Bekanntmachung des Hinweises auf die Patenterteilung: **05.02.1997**
(21) Anmeldenummer: 93117637.4
(22) Anmeldetag: 30.10.1993
(51) Int. Cl.: A01B 29/06, A01D 34/62

(54) **Stützwalze**
Support roller
Rouleau support

(30) Priorität: 16.11.1992 DE 4238603; 19.12.1992 DE 4243251
(43) Veröffentlichungstag der Anmeldung: 25.05.1994
(73) Patentinhaber: Amazonen-Werke H. Dreyer GmbH & Co. KG, D-49205 Hasbergen (DE)
(72) Erfinder: Schomäker, Wilfried, D-66386 St. Ingbert (DE); Klein, Laurent, F-57350 Soicheren (FR)

(56) Entgegenhaltungen:
- EP-A- 0 242 932
- EP-A- 0 305 601
- EP-A- 0 552 709
- DE-U- 8 913 171
- GB-A- 301 978
- GB-A- 500 703
- US-A- 2 815 524

## Beschreibung

Die Erfindung betrifft eine hinter einem Bodenbearbeitungs- oder Mähgerät angeordnete höhenverstellbare Stützwalze gemäß des Oberbegriffes des Patentanspruches 1.

Derartige Stützwalzen sind bereits in der Praxis bekannt geworden wie zum Beispiel in der GB-A-301978 zugehen ist. Sie sind jedoch mit dem Nachteil behaftet, daß die Abstreifereinrichtung der Stützwalze bei Veränderung der Arbeitshöhenlage der Arbeitswerkzeuge ihre Lage zur Bodenoberfläche verändert.

Dieses ist insbesondere bei dem Einsatz einer Stützwalze hinter einem Mähgerät von sehr großem Nachteil, weil die Abstreifereinrichtung nur in einer ganz bestimmten Position zur Bodenoberfläche und zum Walzenmantel eine optimale Abstreifarbeit leistet, in welcher dann sichergestellt ist, daß die Arbeitsqualität des Gerätes nicht negativ beeinflußt wird.

Der Erfindung liegt daher die Aufgabe zugrunde, mit einfachen Mitteln bei allen Höheneinstellungen der Arbeitswerkzeuge des gattungsgemäßen Gerätes sicherzustellen, daß durch die nachlaufende Walze die Arbeitsqualität des Gerätes nicht negativ beeinflußt wird.

Diese Aufgabe wird erfindungsgemäß durch die kennzeichnenden Maßnahmen des Anspruches 1 gelöst. Infolge dieser Maßnahmen wird in überraschend einfacher Weise erreicht, daß die Abstreifereinrichtung immer ihre optimale Position beibehält, wenn die Walze zwecks Einstellung der Höhenlage der Arbeitswerkzeuge relativ zu den Arbeitswerkzeugen des Bodenbearbeitungs- oder Mähgerätes verstellt wird. Somit bleibt also durch diese einfache Maßnahme die bodennahe Position des Abstreiferelementes bei der Höhenverstellung der Walze gegenüber den Arbeitswerkzeugen erhalten. Dieses ist insbesondere beim Einsatz der Walze hinter einem Mähgerät von großem Vorteil, damit das abzustreifende Mähgut, daß sich trotz scharfer Abstreiferkante im Spalt zwischen Walzenmantel und Abstreifer sammelt, durch das Vorbeistreifen der Grasnarbe ausgebürstet wird.

Es wird also durch die Verstelleinrichtung gewährleistet, daß die Abstreifereinrichtung sich mittels der Verstelleinrichtung automatisch bei einer Veränderung der Höhenlage der Walze gegenüber den Arbeitswerkzeugen sich verstellt.

Um die relative Position des Abstreifers zur Bodenoberfläche, also seine Höhenlage verändern zu können, ist vorgesehen, daß die Höhenlage des Abstreifers einstellbar ist.

Die Verstelleinrichtung zur Verstellung der Abstreifereinrichtung ist vorzugsweise so ausgebildet, daß die Verstelleinrichtung derart auf die Abstreifereinrichtung einwirkt, daß mittels der Verstelleinrichtung durch Verschwenken der Tragelemente der Walze zur Höheneinstellung der Arbeitswerkzeuge die Abstreifereinrichtung entgegen der Schwenkbewegung des Tragrahmens der Walze verschwenkbar ist.

Eine einfache Befestigung der Abstreifeinrichtung an der Walze wird dadurch erreicht, daß auf beiden Seiten des Walzenkörpers der Walze jeweils ein Haltearm der Abstreifereinrichtung angeordnet ist, und daß an den Haltearmen die Verstelleinrichtung angreift. Hierdurch wird eine einfache Verstellung der Abstreifereinrichtung erreicht.

Infolge der Maßnahme, daß die Träger federnd ausgebildet sind, wird erreicht, daß der Abstreifer gegen die Walze angedrückt wird, so daß auch bei einem unrunden Walzenmantel der stützwalze immer eine optimale Abstreiffunktion gewährleistet ist. Außerdem kann der Abstreifer bei Hindernissen ausweichen.

Damit die zwischen der Abstreiferleiste und dem Walzenmantel hindurchgelangenden Gras- und Bodenteile frei und ohne Widerstand aus dem Spalt herausgefördert werden und nicht den Spalt verstopfen und nicht die Walze abbremsen, ist das kennzeichnende Merkmal des Anspruches 1 vorgesehen.

Infolge dieser Maßnahme hat sich in überraschender Weise gezeigt, daß die durch den Spalt zwischen Abstreiferleiste und Walzenmantel hindurchgelangenden Gras- oder Bodenteile durch den sehr engen Spalt mitgenommen werden und somit zu keinen Verstopfungen führen.

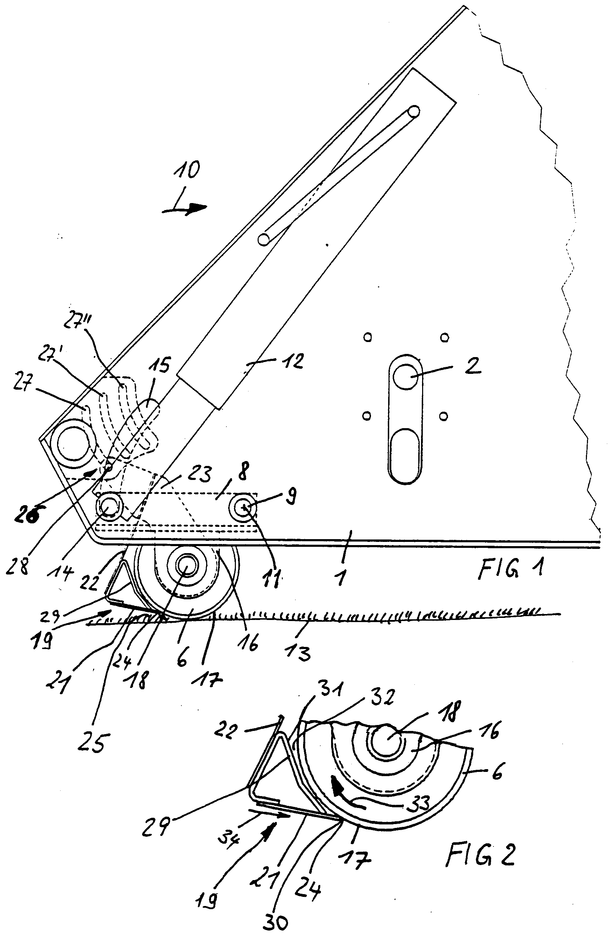

Weitere Einzelheiten der Erfindung sind den übrigen Unteransprüchen, der Beispielsbeschreibung und den Zeichnungen zu entnehmen. Hierbei zeigen
- Fig. 1: ein Mähgerät in der Seitenansicht und in Prinzipdarstellung,
- Fig. 2: die Anordnung des Abstreifers an der Stützwalze des Mähgerätes in Seitenansicht, in Prinzipdarstellung und vergrößertem Maßstab und
- Fig. 3: der hintere Teil des Mähgerätes mit Stützwalze in Seitenansicht und Prinzipdarstellung und
- Fig. 4: die Anordnung des Halteelementes und der Abstreiferleiste an der Stützwalze in vergrößerter Darstellung und ausschnittsweise und in Seitenansicht.

Das Mähgerät weist den Rahmen 1 auf. An der Vorderseite des Rahmens 1 sind bekannte und daher nicht dargestellte Kupplungselemente zum Anbau an beispielsweise einen Traktor angeordnet. Auf der Vorderseite des Rahmens 1 befindet sich an den beiden Außenseiten jeweils ein Lenkrad 2, welches das Mähgerät auf der Vorderseite in der Höhe führen. Am Rahmen 1 ist weiterhin eine Mähtrommel mit den als Mähwerkzeugen ausgebildeten Arbeitswerkzeugen drehbar gelagert. Die Mähtrommel wird in nicht näher dargestellter und beschriebener Weise von einer Kraftquelle rotierend angetrieben. Hinter der Mähtrommel ist an dem Rahmen 1 die Stützwalze 6 höhenverstellbar angeordnet. Weiterhin weist das Mähgerät eine Grasfangeinrichtung auf.

Die Stützwalze 6 ist mit den als Tragarmen 8 ausgebildeten Tragelementen mittels der Bolzen 9 an dem Rahmen 1 in Höhenrichtung um eine quer zur Arbeitsrichtung 10 verlaufende Achse 11 verschwenkbar angeordnet. An den Tragarmen 8 greift die als Hubspindel 12 ausgebildete Höhenverstellungseinrichtung an. Über die Hubspindel 12 können die Tragarme und die durch den Bolzen 9 verlaufende Schwenkachse 11 die Stützwalze 6 gegenüber dem Rahmen 1 zur Einstellung der Höhenlage der Mähwerkzeuge 4 zur Bodenoberfläche 13 verschwenkt werden. Der Bolzen 14, der die Hubspindeln 12 mit den Tragarmen 8 verbunden ist in einem im Rahmen 1 angeordneten Langloch 15 geführt. Durch die Länge dieses Langloches 15 wird auch der Verstellbereich der Walze 6 gegenüber dem Rahmen 1 und den Arbeitswerkzeugen 4 festgelegt. Die Stützwalze 6 ist in dem an den Tragarmen 8 befestigten Lagerblock 16 drehbar gelagert.

Die Stützwalze 6 weist einen geschlossenen Walzenmantel 17 auf. Über die an der Stützwalze 6 angeordneten Achswellen 18 ist die Walze 6 drehbar in dem Lagerblock 16 gelagert. Auf der Rückseite der Stützwalze 6 ist eine Abstreifereinrichtung 19 angeordnet. Diese Abstreifereinrichtung 19 weist das winkelförmige Halteelement 29 auf, an welchem die Abstreiferleiste 21 befestigt ist. Das winkelförmige Halteelement 29 ist über Träger 22 mit den Haltearmen 23 der Verstelleinrichtung 26 verbunden. Die Haltearme 23 sind auf den Achswellen 18 drehbar gegenüber den Tragarmen 8 gelagert. Die Träger 22 der Abstreifereinrichtung 19 sind als Blattfedern ausgebildet, so daß die Träger 22 federnd sind. Mittels der Blattfedern 22 wird die Abstreiferleiste 21 gegen den Walzenmantel 17 der Stützwalze 6 gedrückt. Die Abstreiferleiste 21 befindet sich mit seiner Abstreifkante 24 am Walzenmantel 17 nahe der Bodenoberfläche 13 bzw. des oberen Bereiches der Grasnarbe 25.

Die Haltearme 23 weisen auf ihrem der Achswelle 18 abgewandten Ende eine mit dem Rahmen 1 zusammenwirkende Verstelleinrichtung 26 auf. Diese Verstelleinrichtung 26 besteht aus einem gekrümmten Langloch 27, in welchem an den Haltearmen 23 befestigte bolzenartige Elemente 28 eingreifen. Hierdurch wird erreicht, daß der Abstreifer 21 bei Betätigung der Höheneinstellung 12 der Stützwalze 6 relativ zur Bodenoberfläche 13 in gleicher Position bleibt, denn diese Verstelleinrichtung 26 wirkt der Schwenkbewegung der Walze 6 entgegen. Die Verstelleinrichtung 26 ist also zwischen den Halterungen 23 der Abstreifereinrichtung 19 und dem Rahmen 1 angeordnet. Mittels der Verstelleinrichtung 26 ist der Abstreifer 21 derart verstellbar, daß bei einer Höhenverstellung der Walze 6 gegenüber den Arbeitswerkzeugen 4 die Lage des Abstreifers 21 an der Walze 6 gegenüber der Bodenoberfläche 13 praktisch unverändert bleibt. Die bodennahe Position des Abstreifers 21 soll gewährleistet bleiben, damit abzustreifendes Mähgut, das sich trotz scharfer Abstreiferkante 21 im Spalt zwischen dem Walzenmantel 17 der stützwalze 6 und Abstreifer 21 sammelt, durch das Vorbeistreifen der Grasnarbe 25 ausgebürstet wird. Durch Umstecken des bolzenartigen Elementes 28 von der einen Langlochführung 27 in die andere Langlochführung 27' kann die relative Position des Abstreifers 21 zur Bodenoberfläche 13 verändert werden.

Wie bereits erwähnt, gewährleistet die Blattfeder 23, daß der Abstreifer 21 gegen den Walzenmantel 17 angedrückt wird. Somit wird bei einem unrunden Walzenmantel 17 immer gewährleistet, daß der Abstreifer 21 ständig am Walzenmantel 17 anliegt. Auch kann der Abstreifer 21 bei evtl. Hindernissen ausweichen.

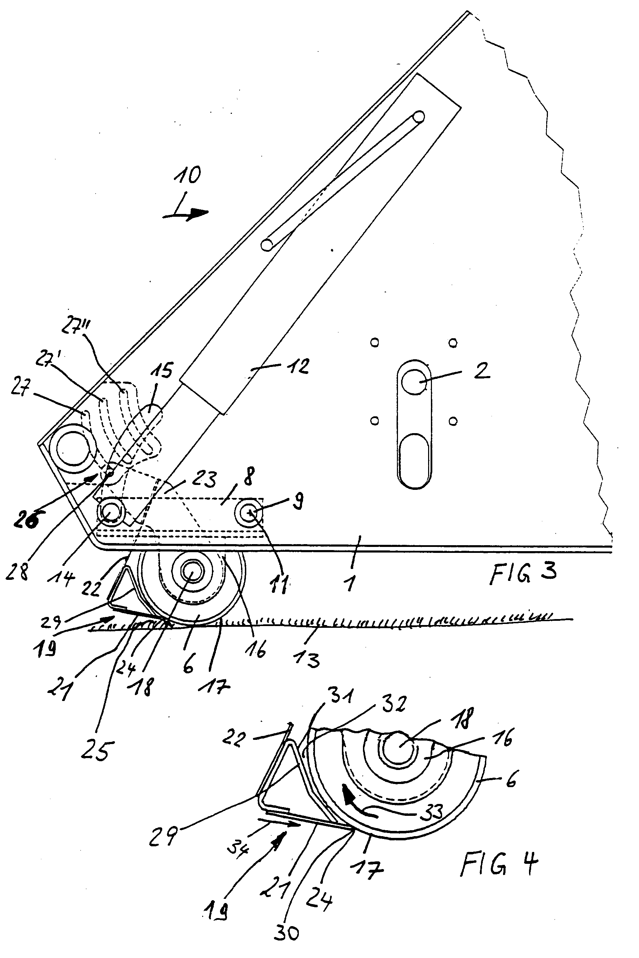

Das Halteelement 29 der Abstreiferleiste 21 gemäß Fig. 3 und 4 weist auf seiner dem Walzenmantel 17 der Stützwalze 6 zugewandten Seite 31 einen zumindest annähernd an die Kontur des Walzenmantels 17 angepaßten Verlauf aufweist. Der Spalt 32 zwischen dem Walzenmantel 17, der Stützwalze 6 und dem Halteelement 29 der Abstreiferleiste 21 ist in Drehrichtung 33 der Stützwalze 6 gesehen zunächst zumindest annähernd konstant und erweitert sich anschließend. Es ist jedoch auch möglich, daß der Spalt 32 zwischen dem Walzenmantel 17 der Stützwalze 6 und dem Halteelement 29 der Abstreiferleiste 21 in Drehrichtung 33 der Walze 6 gesehen, sich unmittelbar von der Abstreiferleiste 21 aus kontinuierlich erweitert.

Die Abstreiferleiste 21 und das Halteelement 29 erstrecken sich über die gesamte Arbeitsbreite der Stützwalze 6. Die Abstreiferleiste 21 ist nachstellbar an dem Halteelement 29 befestigt, damit bei Verschleiß der Abstreiferleiste 21 diese in Pfeilrichtung 34 nachgestellt werden.

## Patentansprüche

1. Hinter einem Bodenbearbeitungs- oder Mähgerät angeordnete höhenverstellbare Stützwalze (6) zur Einstellung der Arbeitshöhenlage der Arbeitswerkzeuge (4) des Gerätes relativ zur Bodenoberfläche (13) mit einer am Walzenmantel (17) anliegenden Abstreifereinrichtung (19), die mittels Halterungen (23) an Tragelementen (8) der Walze (6) angeordnet ist, dadurch gekennzeichnet, daß zwischen den Halterungen (23) der Abstreifereinrichtung (19) und dem Rahmen (1) des Gerätes eine Verstelleinrichtung (26) angeordnet ist, über welche die Abstreifereinrichtung (19) derart verstellbar ist, daß bei einer Höhenverstellung der Walze (6) gegenüber den Arbeitswerkzeugen (4) die Lage des Abstreifers (21) an der Walze (6) gegenüber der Bodenoberfläche (13) unverändert bleibt.

2. Gerät nach Anspruch 1, dadurch gekennzeichnet, daß die Höhenlage des Abstreifers (21) einstellbar ist.

3. Gerät nach einem oder mehreren der vorstehenden Ansprüche, dadurch gekennzeichnet, daß die Verstelleinrichtung (26) derart auf die Abstreifereinrichtung (19) einwirkt, daß mittels der Verstelleinrichtung (26) durch Verschwenken der Tragelemente (8) der Walze (6) zur Höheneinstellung der Arbeitswerkzeuge (4) die Abstreifereinrichtung (19) entgegen der Schwenkbewegung des Tragrahmens (8) der Walze (6) verschwenkbar ist.

4. Gerät nach einem oder mehreren der vorstehenden Ansprüche, dadurch gekennzeichnet, daß auf beiden Seiten des Walzenkörpers (17) der Walze (6) jeweils ein Haltearm (23) der Abstreifereinrichtung (19) angeordnet ist, daß an den Haltearmen (23) die Verstelleinrichtung (26) angreift.

5. Gerät nach einem oder mehreren der vorstehenden Ansprüche, dadurch gekennzeichnet, daß der Haltearm (23) an seiner der Verstelleinrichtung (26) abgewandten Seite um die Drehachse (18) der Walze (6) drehbar gegenüber den Tragelementen (8) gelagert ist.

6. Gerät nach einem oder mehreren der vorstehenden Ansprüche, dadurch gekennzeichnet, daß die Tragelemente (8) der Walze (6) am Rahmen (1) des Gerätes um eine horizontale und quer zur Fahrtrichtung (10) verlaufenden Achse (11) verschwenkbar befestigt sind, daß zwischen den Tragelementen (8) und dem Rahmen (1) des Gerätes eine Höhenverstelleinrichtung (12) angeordnet ist.

7. Gerät nach einem oder mehreren der vorstehenden Ansprüche, dadurch gekennzeichnet, daß an den Haltearmen (23) die Abstreifereinrichtung (19) über Träger (22) befestigt ist.

8. Gerät nach einem oder mehreren der vorstehenden Ansprüche, dadurch gekennzeichnet, daß die Träger (22) federnd ausgebildet sind.

9. Gerät nach einem oder mehreren der vorstehenden Ansprüche, dadurch gekennzeichnet, daß die mit den Haltearmen (23) zusammenwirkende Verstelleinrichtung (26) im Rahmen (1) angeordnete Langlöcher (27,27') aufweist, in die an den Haltearmen (23) befestigte bolzenartige Elemente (28) eingreifen.

10. Gerät nach Anspruch 1, dadurch gekennzeichnet, daß das Halteelement (29) der Abstreiferleiste (21) auf seiner dem Walzenmantel (17) der Stützwalze (6) zugewandten Seite (36) einen zumindest annähernd an die Kontur des Walzenmantels (17) angepaßten Verlauf aufweist.

11. Gerät nach Anspruch 10, dadurch gekennzeichnet, daß der Spalt (32) zwischen dem Walzenmantel (17) der Stützwalze (6) und dem Halteelement (29) der Abstreiferleiste (21) in Drehrichtung (33) der Stützwalze (6) gesehen zumindest annähernd konstant bleibt und sich anschließend erweitert.

12. Gerät nach Anspruch 10, dadurch gekennzeichnet, daß der Spalt zwischen dem Walzenmantel (17) der Stützwalze (6) und dem Halteelement (29) der Abstreiferleiste (21) in Drehrichtung (33) der Stützwalze (6) gesehen sich von der Abstreiferleiste (21) aus erweitert.

13. Gerät nach einem oder mehreren der vorstehenden Ansprüche, dadurch gekennzeichnet, daß die Abstreiferleiste (21) und das Halteelement (29) sich über die gesamte Arbeitsbreite der Stützwalze (6) erstrecken.

14. Gerät nach einem oder mehreren der vorstehenden Ansprüche, dadurch gekennzeichnet, daß die Abstreiferleiste (21) nachstellbar an dem Halteelement (29) befestigt ist.

## Claims

1. Vertically adjustable support roller (6), which is disposed behind a ground cultivating or harvesting implement, for adjusting the vertical operational position of the processing tools (4) of the apparatus relative to the ground surface (13), having a scraper arrangement (19), which lies adjacent the roller shell (17) and is disposed on supporting elements (8) of the roller (6) by means of retaining supports (23), characterised in that an adjustment arrangement (26) is disposed between the retaining supports (23) of the scraper arrangement (19) and the frame (1) of the apparatus, and via which adjustment arrangement the scraper arrangement (19) is adjustable in such a manner that, when the roller (6) is vertically adjusted relative to the processing tools (4), the position of the scraper (21) on the roller (6) remains unchanged relative to the ground surface (13).

2. Apparatus according to claim 1, characterised in that the vertical position of the scraper (21) is adjustable.

3. Apparatus according to one or more of the preceding claims, characterised in that the adjustment arrangement (26) acts on the scraper arrangement (19) in such a manner that, as a result of the supporting elements (8) of the roller (6) being pivoted for the vertical adjustment of the processing tools (4), the scraper arrangement (19) is pivotable by means of the adjustment arrangement (26) in opposition to the pivotal movement of the supporting frame (8) of the roller (6).

4. Apparatus according to one or more of the preceding claims, characterised in that a respective retaining arm (23) of the scraper arrangement (19) is disposed on each of the two sides of the roller body (17) of the roller (6), and in that the adjustment arrangement (26) co-operates with the retaining arms (23).

5. Apparatus according to one or more of the preceding claims, characterised in that, at its side remote from the adjustment arrangement (26), the retaining arm (23) is mounted so as to be rotatable about the axis of rotation (18) of the roller (6) relative to the supporting elements (8).

6. Apparatus according to one or more of the preceding claims, characterised in that the supporting elements (8) of the roller (6) are mounted on the frame (1) of the apparatus so as to be pivotable about a horizontal axis (11), which extends at right angles to the direction of travel (10), and in that a vertical adjustment arrangement (12) is disposed between the supporting elements (8) and the frame (1) of the apparatus.

7. Apparatus according to one or more of the preceding claims, characterised in that the scraper arrangement (19) is mounted on the retaining arms (23) via supports (22).

8. Apparatus according to one or more of the preceding claims, characterised in that the supports (22) are resilient.

9. Apparatus according to one or more of the preceding claims, characterised in that the adjustment arrangement (26), which co-operates with the retaining arms (23), has elongate slots (27, 27'), which are disposed in the frame (1) and in which the pin-like elements (28), mounted on the retaining arms (23), engage.

10. Apparatus according to claim 1, characterised in that the retaining element (29) of the scraper edge (21) has a configuration adapted at least approximately to the contour of the roller shell (17) on its side (36) facing the roller shell (17) of the support roller (6).

11. Apparatus according to claim 10, characterised in that, when viewed with respect to the direction of rotation (33) of the support roller (6), the gap (32) between the roller shell (17) of the support roller (6) and the retaining element (29) of the scraper edge (21) remains at least approximately constant and subsequently widens.

12. Apparatus according to claim 10, characterised in that, when viewed with respect to the direction of rotation (33) of the support roller (6), the gap between the roller shell (17) of the support roller (6) and the retaining element (29) of the scraper edge (21) widens from the scraper edge (21).

13. Apparatus according to one or more of the preceding claims, characterised in that the scraper edge (21) and the retaining element (29) extend over the entire working width of the support roller (6).

14. Apparatus according to one or more of the preceding claims, characterised in that the scraper edge (21) is adjustably mounted on the retaining element (29).

## Revendications

1. Cylindre d'appui (6) monté de manière réglable en hauteur derrière un appareil de traitement du sol ou de fauchage, pour régler la hauteur de travail des outils (4) de l'appareil par rapport à la surface (13) du sol, comprenant un dispositif de raclage (19) appliqué contre l'enveloppe du tambour (17), ce dispositif étant monté par des moyens de fixation (23) sur des éléments de support (8) du cylindre (6),
caractérisé en ce qu'
entre les moyens de fixation (23) du dispositif de raclage (19) et le châssis (1) de l'appareil, il est prévu une installation de réglage (26) permettant de régler le dispositif de raclage (19) de façon que pour un réglage de la hauteur du cylindre (6) par rapport aux outils (4), la position du racleur (21) contre le cylindre (6) reste inchangée par rapport à la surface (13) du sol.

2. Appareil selon la revendication 1,
caractérisé en ce que
la position en hauteur du racleur (21) est réglable.

3. Appareil selon l'une ou plusieurs des revendications précédentes,
caractérisé en ce que
l'installation de réglage (26) agit sur l'installation de raclage (19) de façon qu'à l'aide de l'installation de réglage (26), par basculement des éléments de support (8), pour le réglage en hauteur des outils (4), le cylindre (6) puisse basculer le dispositif de raclage (19) contre le mouvement de basculement du châssis (8) du cylindre (6).

4. Appareil selon l'une ou plusieurs des revendications précédentes,
caractérisé en ce que
sur les côtés du corps (17) du cylindre (16), il est prévu chaque fois un bras de fixation (23) pour le dispositif de raclage (19), et le dispositif de réglage (26) agit sur les bras de fixation (23).

5. Appareil selon l'une ou plusieurs des revendications précédentes,
caractérisé en ce que
le bras de fixation (23) est monté tournant sur son côté opposé à l'installation de réglage (26), autour de l'axe de rotation (18) du cylindre (6), par rapport aux éléments de support (8).

6. Appareil selon l'une ou plusieurs des revendications précédentes,
caractérisé en ce que
les éléments de support (8) du cylindre (6) sont fixés de manière basculante au châssis (1) de l'appareil, autour d'un axe horizontal (11), transversal par rapport à la direction de circulation (10), et un dispositif de réglage en hauteur (12) est prévu entre les éléments de support (8) et le châssis (1) de l'appareil.

7. Appareil selon l'une ou plusieurs des revendications précédentes,
caractérisé en ce que
le dispositif de raclage (19) est fixé par des supports (22) aux bras de fixation (23).

8. Appareil selon l'une ou plusieurs des revendications précédentes,
caractérisé en ce que
les supports (22) sont à ressort.

9. Appareil selon l'une ou plusieurs des revendications précédentes,
caractérisé en ce que
l'installation de réglage (26) coopérant avec les bras de fixation (23) comporte des trous oblongs (27, 27') dans le châssis (1), ces trous recevant des éléments de fixation (28) en forme de goujons reliés aux bras de fixation (23).

10. Appareil selon la revendication 1,
caractérisé en ce que
l'élément de fixation (29) de la baguette de raclage (21) comporte sur son côté (36) tourné vers le l'enveloppe (17) du cylindre d'appui (6), une forme au moins approximativement adaptée au contour de l'enveloppe (17) du cylindre.

11. Appareil selon la revendication 10,
caractérisé en ce que
l'intervalle (32) entre l'enveloppe (17) du cylindre d'appui (6) et l'élément d'appui (29) de la baguette de raclage (21) est au moins approximativement constant dans la direction (33) du cylindre d'appui (6), puis augmente.

12. Appareil selon la revendication 10,
caractérisé en ce que
l'intervalle entre l'enveloppe (17) du cylindre d'appui (6) et l'élément de fixation (29) de la baguette de raclage (21) va en s'élargissant dans le sens de rotation (33) du cylindre d'appui (6), à partir de la baguette de raclage (21).

13. Appareil selon l'une ou plusieurs des revendications précédentes,
caractérisé en ce que
la baguette de raclage (21) et l'élément de fixation (29) s'étendent sur toute la largeur active du cylindre d'appui (6).

14. Appareil selon l'une ou plusieurs des revendications précédentes,
caractérisé en ce que
la baguette de raclage (21) est fixée de manière réglable sur l'élément de fixation (29).
